# EUROPÄISCHE PATENTSCHRIFT

(11) **EP 1 119 463 B1**
(45) Veröffentlichungstag und Bekanntmachung des Hinweises auf die Patenterteilung: **23.06.2004**
(21) Anmeldenummer: 99944494.6
(22) Anmeldetag: 24.08.1999
(51) Int. Cl.: B60H 1/00, B60K 35/00, B60R 16/02

(54) **BEDIENEINHEIT FÜR EIN FAHRZEUG**
CONTROL UNIT FOR A MOTOR VEHICLE
UNITE DE REGLAGE POUR UN VEHICULE

(30) Priorität: 15.10.1998 DE 19847610
(43) Veröffentlichungstag der Anmeldung: 01.08.2001
(73) Patentinhaber: Volkswagen Aktiengesellschaft, 38436 Wolfsburg (DE)
(72) Erfinder: BÖCKMANN, Ingo, D-38551 Ribbesbüttel (DE); EBERT, Holger, D-90429 Nürnberg (DE); HEIMERMANN, Matthias, D-38302 Wolfenbüttel (DE)
(74) Vertreter: Effert, Bressel und Kollegen
(86) Internationale Anmeldenummer: PCT/EP1999/006197
(87) Internationale Veröffentlichungsnummer: WO 2000/021765

(56) Entgegenhaltungen:
- EP-A- 0 461 360
- EP-A- 0 795 807
- WO-A-98/09846
- DE-C- 4 338 171
- US-A- 4 586 035
- US-A- 4 731 769
- US-A- 5 539 429

## Beschreibung

Die Erfindung betrifft ein Bedienelement für ein Fahrzeug, insbesondere für ein Kraftfahrzeug, umfassend eine Anzeigeeinrichtung, insbesondere einen Bildschirm und Bedienelemente zum Zugriff auf unterschiedliche Anzeige- und Bedienmenüs, die mittels der Anzeigeeinrichtung darstellbar sind.

Insbesondere in Kraftfahrzeugen werden den Fahrzeuginsassen immer mehr Komfortfunktionen angeboten. So kann beispielsweise die Innen-Temperatur lokal unterschiedlich eingestellt werden. Dabei wird nicht nur eine unterschiedliche Temperaturverteilung von den einzelnen Sitzplätzen, sondern auch an einem Sitz selbst ermöglicht. Weitere Komfortfunktionen sind beispielsweise lokale Gebläseeinstellungen, Sitzeinstellungen, Navigationsgeräte oder Audio-Geräte. Allerdings führt diese Vielzahl von Einstellungsmöglichkeiten auch zu einer gewissen Unübersichtlichkeit, sowohl hinsichtlich der Bedienung als auch der Darstellung. Dies wiederum führt dazu, daß viele vorhandenen Komfortfunktionen von den Insassen nicht genutzt werden.

Aus der EP 0 795 807 A1 ist eine Bedieneinheit für eine Fahrzeug-Heiz- oder Klimaanlage mit einem Zugriff auf unterschiedliche Anzeige- und Bedienmenüs bekannt, die auf einem Bordmonitor darstellbar sind. Neben einer Wahlmöglichkeit für ein Automatikprogramm über eine Automatiktaste ist eine individuelle Einstellmöglichkeit für die Termperaturverteilung und/oder Luftverteilung in verschiedenen am Bordmonitor anzeigbaren und auswählbaren Zonen des Fahrzeuginnenraumes vorgesehen. Bei diesen Zonen kann es sich beispielsweise um den Fußraum handeln oder um die Zone, in der sich die Sitzfläche befindet oder um die Zone des Brustkorbes sowie um diejenige Zone, in der sich üblicherweise die Köpfe der Fahrzeuginsassen befinden. Die einzelnen Zonen sind in einer gezeigten Symboldarstellung am Bordmonitor sichtbar, die einen sitzenden Fahrzeuginsassen zeigt. Dabei kann für jeden Fahrzeuginsassen eine eigene Zonenunterteilung vorgesehen sein, d.h. es kann eine individuelle Einstellung für "links vorne", "rechts vorne", "links hinten" und "rechts hinten" vorgesehen sein. Die Symboldarstellung erscheint dabei nach einem Druck auf die Individual-Taste am Bordmonitor. Ferner erscheint ein Balkendiagramm, welches näherungsweise einen Temperaturwert symbolisiert. Hierzu ist dieses Balkendiagramm zweifarbig gestaltet.

Mittels eines Bedienelements wird eine der vier Zonen ausgewählt, wobei die ausgewählte Zone dunkler unterlegt wird. Für diese jeweils aktuell ausgewählte Zone kann nun individuell eine Wunschtemperatur eingestellt werden. Dieses Bedienelement ist gegenüber anderen vorbekannten Bedienelementen bereits sehr übersichtlich und benutzerfreundlich. Nachteilig an dem Bedienelement ist, dass bei der Auswahl der Position sehr leicht ein Fehler auftreten kann, so dass die Temperaturverteilung eines anderen Sitzes verändert wird. Ein weiteres Problem stellt die Vielzahl an unterschiedlichen Schaltern und Bedienelementen dar, die die Handhabbarkeit insbesondere bei Dunkelheit erschwert.

Aus der US-5,539,429 ist eine Bedieneinheit für das Klima in einem Kraftfahrzeug bekannt, umfassend eine Anzeigeeinrichtung, wobei auf der Anzeigeeinrichtung Temperatur und Gebläseeinstellung für einen Fahrzeugsitz gleichzeitig darstellbar sind, wobei die Temperatur alphanumerisch und die Gebläseeinstellung piktogrammförmig dargestellt ist.

Aus der WO 98/09846 ist eine gattungsgemäße Bedieneinheit für das Klima in einem Kraftfahrzeug bekannt, umfassend eine Anzeigeeinrichtung, insbesondere einen Bildschirm, und Bedienelemente zum Zugriff auf unterschiedliche Anzeige- und Bedienmenüs, die mittels der Anzeigeeinrichtung darstellbar sind, wobei die Anzeige- und Bedienmenüs als Informationspanels ausgebildet sind, in denen aktuelle lokale Einstellungen entsprechend ihrer räumlichen Anordnung im Fahrzeug darstellbar sind, wobei die lokalen Einstellungen mindestens eine eingestellte Temperatur und eine Gebläseeinstellung für einen Fahrzeugsitz umfassen.

Der Erfindung liegt daher das technische Problem zugrunde, den Informationsgehalt einer derartigen Anzeigeeinrichtung zu erhöhen und zu verbessern.

Die Lösung des technischen Problems ergibt sich durch die Merkmale des Patentanspruchs 1. Hierzu werden verschiedene Gebläseeinstellungen für mindestens zwei Sitzplätze gleichzeitig piktogrammförmig dargestellt, wobei die zugeordnete Temperatur für den Sitzplatz alphanumerisch entsprechend der räumlichen Anordnung der Piktrogramme dargestellt ist, wobei mittels eines Bedienelementes zwischen dem Anzeige- und Bedienmenü für das Klima des Fahrers und das Klima des Fonds gewechselt werden kann.

Weitere vorteilhafte Ausgestaltungen der Erfindung ergeben sich aus den Unteransprüchen.

Zur besseren Zuordnung der Bedienelemente zu ihren Funktionen umfasst das Informationspanel piktographische und/oder alphanumerische Einstellfelder, die räumlich den ihnen jeweils zugewiesenen Bedienelementen zugeordnet sind, d.h. für eine bestimmte Informationspaneldarstellung wird auf eine multifunktionale Schalterbelegung verzichtet.

In einer weiteren bevorzugten Ausführungsform ist die Anzeigeeinrichtung als touch screen ausgebildet, auf dem die jeweiligen Bedienelemente graphisch hervorgehoben sind, so dass separate Bedienelemente entfallen bzw. eingespart werden können. Dies erlaubt des weiteren eine variable Anordnung und Größe des Informationspanels auf der Anzeigeeinrichtung, da die Bedienelemente entsprechend Anordnung und Größe anpaßbar sind. Die Bedienelemente verschieben sich dabei auf dem Bordmonitor mit den Informationspanels mit. Weiter bietet dies auch die Möglichkeit, bei Bedarf verschiedene Informationspanels gleichzeitig darzustellen, so daß in dem einen Menü geändert werden kann, ohne das andere Menü vollkommen wegzuschalten.

Die Erfindung wird nachfolgend anhand eines bevorzugten Ausführungsbeispiels näher erläutert. Die Figuren zeigen:
- Fig. 1: eine Darstellung eines Informationspanels für das Klima in einem Kraftfahrzeug,
- Fig. 2: eine Darstellung nach einer Umschaltung des Informationspanels gemäß Fig. 1,
- Fig. 3: sich überlappende Informationspanels,
- Fig. 4: erste historisch wachsende Informationspanels und

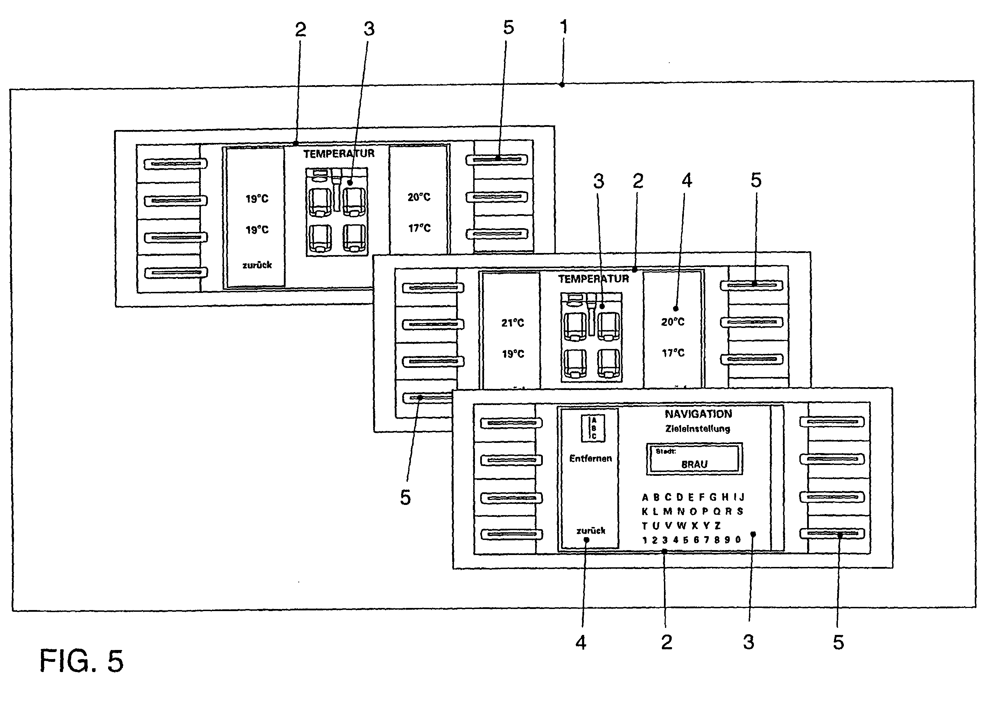

- Fig. 5: zweite historisch wachsende Informationspanels.

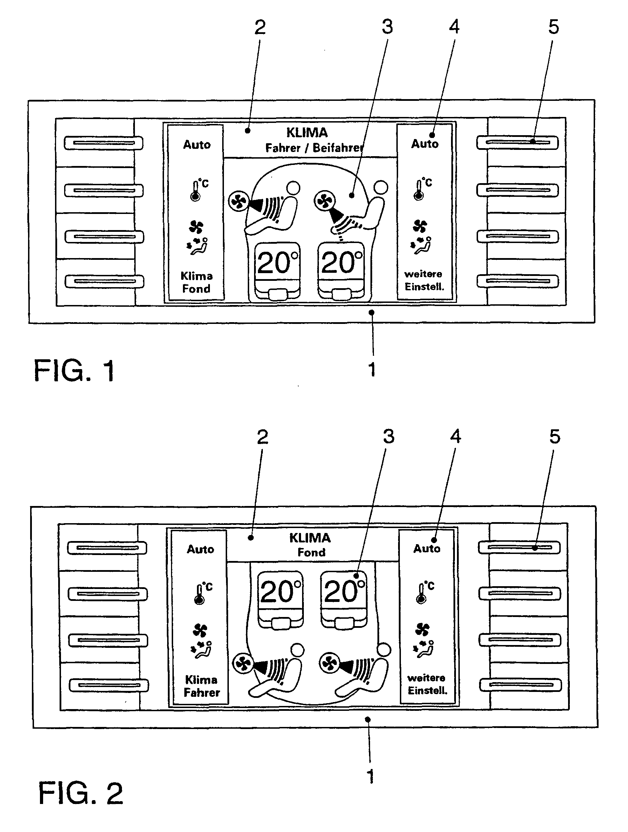

In der Fig. 1 ist ein Bordmonitor 1 mit einem Informationspanel 2 für das Klima im Kraftfahrzeug dargestellt. Das Informationspanel 2 umfaßt ein piktogrammförmiges und alphanumerisches Anzeigefeld 3 für verschiedene lokale Einstellungen, piktogrammförmige und alphanumerische Einstellfelder 4 und Bedienelemente 5. Das Anzeigefeld 3 beinhaltet Information über die Temperatur, Gebläseeinstellung und die Sitzeinstellung, wobei die Anordnung im Anzeigefeld mit der räumlichen Anordnung im Kraftfahrzeug übereinstimmt. Wie dem Anzeigefeld 3 in Fig. 1 zu entnehmen ist, ist die Temperatur jeweils auf 20° C bei normaler Sitzeinstellung für Fahrer und Beifahrer eingestellt. Das Gebläse des Fahrers ist auf den Brustkorb und das des Beifahrers auf die Beine gerichtet. Somit sind auf einen Blick sechs Einstellungen inklusive ihrer räumlichen Zuordnung einfach erfaßbar. Die Einsteilfelder 4 zeigen die in diesem informationspanel 2 beeinflußbaren Komfortfunktionen. Die Einstellfelder 4 sind räumlich den ihnen zugewiesenen Bedienelementen 5 zugeordnet, wobei die Bedienelemente 5 integraler Bestandteil des Informationspanels 2 sind.
Dabei dienen die beiden "Auto"-Einstellfelder 4 jeweils zum Einstellen von Standardeinstellungen für den Fahrer bzw. den Beifahrer. Darunter ist jeweils das Einstellfeld 4 für die Temperatur angeordnet. Wird nun beispielsweise das dem Einstellfeld 4 zugeordnete Bedienlement 5 betätigt, so kann durch entsprechendes Drücken des linken Bedienelementes 5 die Temperatur für den Fahrer verändert werden. Dazu kann das Bedienelement 5 beispielsweise als Zweifeld-Taster ausgebildet sein, so daß die Temperatur schrittweise erhöht oder erniedrigt wird. Das Einstellfeld 4 "weitere Einstellungen" ist dem Bedienelement 5 zugeordnet, mittels dem ein anderes Informationspanel aufgerufen werden kann. Wird das dem Einstellfeld 4 "Klima Fond" zugeordnete Schalterelement 5 betätigt, so wechselt das Informationspanel 2 seine Anzeige gemäß der Darstellung in Fig. 2. Auch hier wiederum entspricht der Aufbau des Anzeigefeldes der tatsächlichen Anordnung im Kraftfahrzeug. Entsprechend kann nun vom Fahrer oder Beifahrer die Temperatur und das Gebläse lokal für die Fond-Insassen geändert werden.

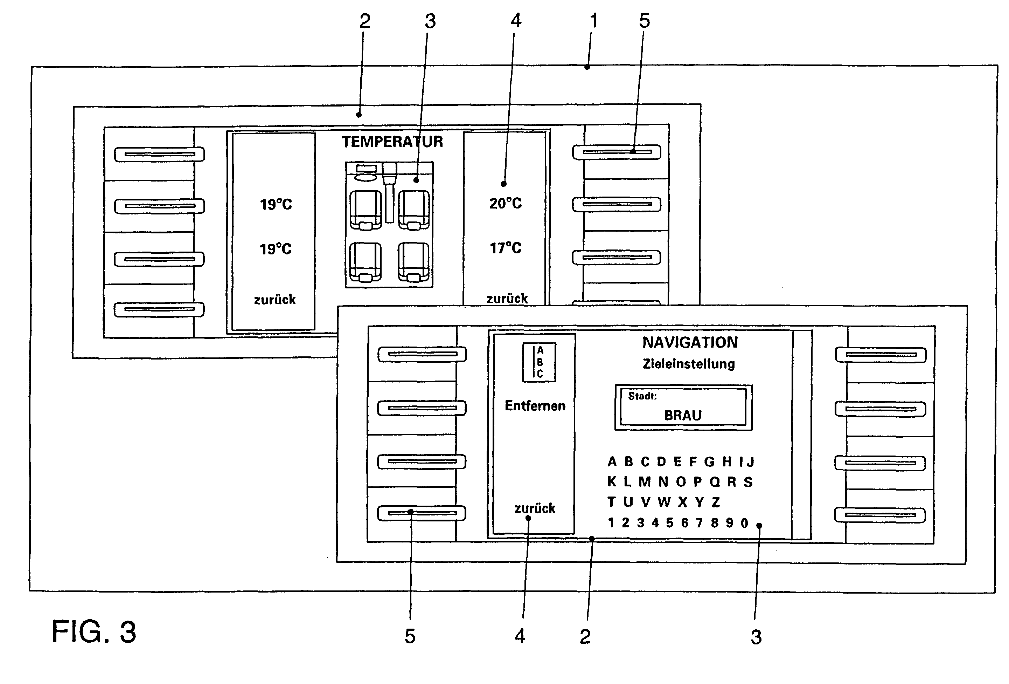

Müssen verschiedene Einstellungen öfter vorgenommen werden, so können mehrere Informationspanels 2 gleichzeitig aufgerufen werden, was in der Fig. 3 für die Temperatur und ein Navigationsgerät dargestellt ist. Die Informationpanels 2 können dabei in ihrer Größe verändert und beliebig verschoben werden. Ebenso können diese überlappend und optisch in unterschiedlichen Ebenen liegend dargestellt werden, ähnlich den "Windows" bei Computer-Monitoren. Durch Antippen des in der hinteren Ebene liegenden Informationspanels wird dieses dann in den Vordergrund gespielt. Bei dem Informationspanel 2 für die Temperatur übernehmen die Einstellfelder 4 auch Funktionen des Anzeigefeldes 3. Dazu sind die Einstellfelder 4 bestimmten räumlichen Bereichen des Anzeigefeldes 3 zugeordnet, wobei dann an den Einstellfeldern 4 der jeweilige Temperaturwert alphanumerisch erscheint, also beispielsweise 19° C für den Fahrer und 20° für den Beifahrer.

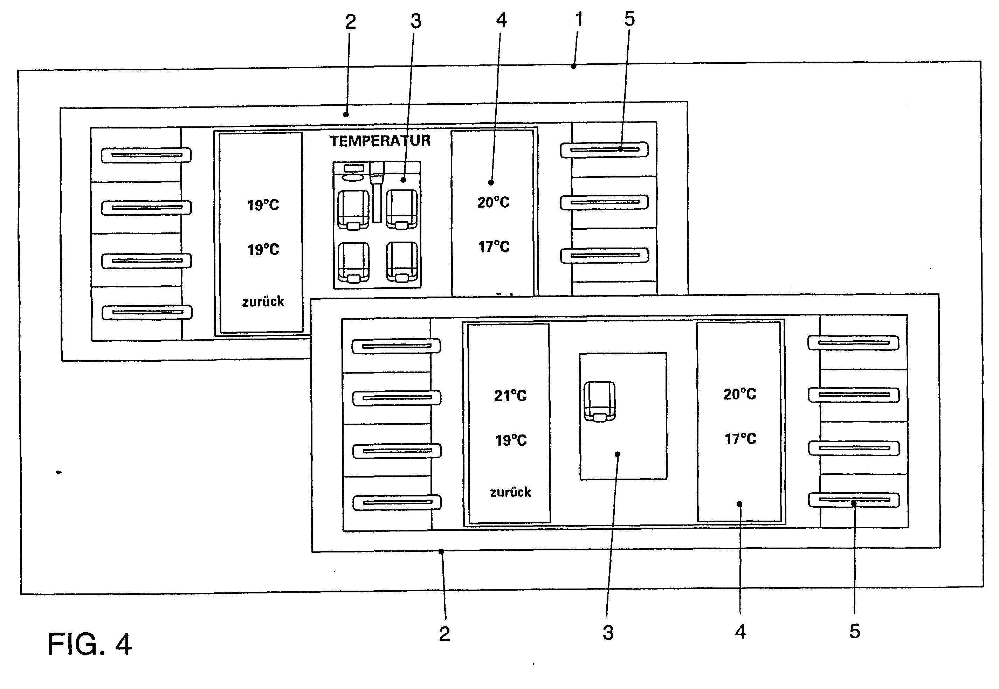

Darüber hinaus ist eine historische Entwicklung einer Einstellung durch Darstellungen verschiedener Informationspanels 2 möglich, wie dies in Fig. 4 dargestellt ist. Dabei sei das hintere Informationspanel 2 eine aktuelle Einstellung der Temperatur im Kraftfahrzeug. Möchte nun der Fahrer seine Temperatur auf 21° C erhöhen, so betätigt dieser das zugeordnete Bedienelement 5. Dadurch wird das Informationspanel 2 mit den vorherigen Einstellungen als überholt erkannt und ein neues Informationspanel 2 im Vordergrund geöffnet. In den neuen Informationspanel 2 ist der zu verändernde Bereich optisch hervorgehoben und kann verändert werden. Wird nun anschließend das Informationspanel 2 für das Navigationsgerät aufgerufen, so wird dieses in den Vordergrund gespielt. Dadurch erkennt der Benutzer sehr schnell, welche Informationspanels 2 er zuletzt aufgerufen hat und was er verändert hat.

### BEZUGSZEICHENLISTE

- 1.: Anzeigeeinrichtung, Bordmonitor
- 2.: Informationspanel
- 3.: Anzeigefeld
- 4.: Einstellfelder
- 5.: Bedienelemente

## Patentansprüche

1. Bedieneinheit für das Klima in einem Kraftfahrzeug, umfassend eine Anzeigeeinrichtung (1), insbesondere einen Bildschirm, und Bedienelemente (5) zum Zugriff auf unterschiedliche Anzeige- und Bedienmenüs (3), die mittels der Anzeigeeinrichtung (1) darstellbar sind, wobei die Anzeige- und Bedienmenüs (3) als Informationspanels (2) ausgebildet sind, in denen aktuelle lokale Einstellungen entsprechend ihrer räumlichen Anordnung im Fahrzeug darstellbar sind, wobei die lokalen Einstellungen mindestens eine eingestellte Temperatur und eine Gebläseeinstellung für einen Fahrzeugsitz umfassen, **dadurch gekennzeichnet, dass**
die verschiedenen Gebläseeinstellungen für mindestens zwei Sitzplätze gleichzeitig piktogrammförmig dargestellt sind und die zugeordnete Temperatur für den Sitzplatz alphanumerisch entsprechend der räumlichen Anordnung der Piktogramme dargestellt ist, wobei mittels eines Bedienelementes (5) zwischen dem Anzeige- und Bedienmenü (3) für das Klima des Fahrers und das Klima des Fonds gewechselt werden kann.

2. Bedieneinheit nach Anspruch 1, **dadurch gekennzeichnet, dass** das Informationspanel (2) piktogrammförmige und/oder alphanumerische Einstellfelder (4) umfasst, die räumlich den ihnen jeweils zugewiesenen Bedienelementen (5) zugeordnet sind.

3. Bedieneinheit nach einem der vorangegangenen Ansprüche, **dadurch gekennzeichnet, dass** die Anzeigeeinrichtung (1) als touch screen ausgebildet ist, auf dem die Bedienelemente (5) graphisch hervorgehoben sind.

4. Bedieneinheit nach einem der vorangegangenen Ansprüche, **dadurch gekennzeichnet, dass** simultan mehrere verschiedener Informationspanels (2) darstellbar sind, wobei diese jeweils hinsichtlich Größe, Ort und Darstellungsebenen veränderbar sind.

## Claims

1. Control unit for the air conditioning in a motor vehicle, comprising a display device (1), particularly a screen, and control elements (5) for accessing different display and control menus (3) which can be displayed by means of the display device (1), where the display and control menus (3) are in the form of information panels (2) which are able to display current local settings according to their spatial arrangement in the vehicle, the local settings comprising at least a temperature which has been set and a blower setting for a vehicle seat,
**characterized in that**
the various blower settings for at least two seats are displayed simultaneously in pictogram form, and the associated temperature for the seat is displayed alphanumerically according to the spatial arrangement of the pictograms, a control element (5) being able to be used to change between the display and control menu (3) for the driver's air conditioning and for the air conditioning in the back.

2. Control unit according to Claim 1, **characterized in that** the information panel (2) comprises pictographic and/or alphanumeric setting fields (4) which are spatially associated with their respective assigned control elements (5).

3. Control unit according to one of the preceding claims, **characterized in that** the display device (1) is in the form of a touchscreen on which the control elements (5) are graphically highlighted.

4. Control unit according to one of the preceding claims, **characterized in that** a plurality of different information panels (2) can be displayed simultaneously, and they can each be altered with regard to size, location and display levels.

## Revendications

1. Module de commande de l'air conditionné dans un véhicule automobile, comprenant un dispositif d'affichage (1), notamment un écran, et des éléments de commande (5) pour accéder à différents menus d'affichage et de commande (3) qui peuvent être représentés par le dispositif d'affichage (1), les menus d'affichage et de commande (3) étant réalisés sous la forme de volets d'information (2) dans lesquels peuvent être représentés les réglages locaux courants en fonction de leur disposition dans l'espace du véhicule, les réglages locaux comprenant au moins une température réglée et un réglage de la soufflerie pour un siège du véhicule, **caractérisé en ce que** les différents réglages de la soufflerie pour au moins deux places assises sont représentés simultanément sous la forme de pictogrammes et la température associée de la place assise est représentée sous forme alphanumérique en fonction de la disposition des pictogrammes dans l'espace, un élément de commande (5) permettant de basculer entre le menu d'affichage et de commande (3) pour l'air conditionné du conducteur et l'air conditionné de l'arrière.

2. Module de commande selon la revendication 1, **caractérisé en ce que** le volet d'information (2) comprend des champs de réglage (4) en forme de pictogramme et/ou alphanumériques qui sont associés dans l'espace aux éléments de commande (5) qui leur sont à chaque fois affectés.

3. Module de commande selon l'une des revendications précédentes, **caractérisé en ce que** le dispositif d'affichage (1) est réalisé sous la forme d'un écran tactile sur lequel les éléments de commande (5) sont mis en valeur sous forme graphique.

4. Module de commande selon l'une des revendications précédentes, **caractérisé en ce que** plusieurs volets d'information (2) différents peuvent être représentés simultanément, la taille, l'emplacement et le plan de représentation de ceux-ci pouvant être modifiés.
